# EUROPÄISCHE PATENTSCHRIFT

(11) **EP 1 637 421 B1**
(45) Veröffentlichungstag und Bekanntmachung des Hinweises auf die Patenterteilung: **25.07.2012**
(21) Anmeldenummer: 05108376.4
(22) Anmeldetag: 13.09.2005
(51) Int. Cl.: B60T 7/06, G05G 1/32, G05G 1/46

(54) **Bremsenbetätigungseinrichtung für ein Kraftfahrzeug**
Brake actuating device for a vehicle
Dispositif d'actionnement des freins d'un véhicule

(30) Priorität: 17.09.2004 DE 102004045266
(43) Veröffentlichungstag der Anmeldung: 22.03.2006
(73) Patentinhaber: Bayerische Motoren Werke Aktiengesellschaft, 80809 München (DE)
(72) Erfinder: Irzinger, Albert, 84164, Moosthenning (DE); Melzer, Franz, 80936 München (DE)

(56) Entgegenhaltungen:
- WO-A1-97/49589
- DE-C1- 19 951 589
- GB-A- 2 230 493

## Beschreibung

Die vorliegende Erfindung betrifft eine im Bereich einer Stirnwand eines Kraftfahrzeugs angeordnete Bremsenbetätigungseinrichtung, nach dem Oberbegriff des ersten Anspruchs.

Zur Verringerung des Verletzungsrisikos sind bereits verschiedene Bremsenbetätigungseinrichtungen für Kraftfahrzeuge bekannt geworden, deren Pedalanordnung das Bremspedal im Falle einer unfallbedingten Intrusion der Stirnwand um im wesentlichen eine in Fahrzeugquerrichtung verlaufende Schwenkachse so verschwenkt, dass es aus dem Fußraum des Fahrers, von diesem weg, bewegt wird.

Die DE 199 51 589 C1 beschreibt eine solche Bremsenbetätigungseinrichtung für Kraftfahrzeuge, deren Lagerbock des Bremspedals, im Falle einer eine entsprechend starke Intrusion der Stirnwand bewirkenden Vorbauverformung, eine ausgeprägte Schwenkbewegung um seinen aufbau- bzw. stirnwandseitigen Lagerpunkt in Abwärtsrichtung als gezielt ausgeführte Drehbewegung zur Pedalverlagerung in Richtung auf die Stirnwand hin ausführt. Dazu sind der Lagerbock an der dem Fahrgastraum zugekehrten Seite der Stirnwand und das Bremsgerät mit seiner Druckstange, die Stirnwand durchsetzend sowie unabhängig vom Lagerbock, im Motorraum angeordnet.

Aufgabe der vorliegenden Erfindung ist es, eine Bremsenbetätigungseinrichtung bereitzustellen, die im Hinblick auf Sicherheit weiter verbessert ist.

Die Aufgabe wird durch die Merkmale des ersten Anspruchs gelöst. Weitere Ausgestaltungen der Erfindung beschreiben die abhängigen Ansprüche.

Die Erfindung betrifft eine Bremsenbetätigungseinrichtung für ein Kraftfahrzeug, mit einer einen Motorraum von einem Fahrgastraum trennenden Stirnwand, der mindestens ein hängend angeordnetes, an einem Lagerbock verschwenkbar befestigtes Bremspedal im Fahrgastraum und ein über eine Druckstange vom Bremspedal betätigbares Bremsgerät im Motorraum zugeordnet ist, wobei in Fahrtrichtung vor dem Bremsgerät ein Vorbauteil, insbesondere ein Dom zur karosserieseitigen Lagerung eines Stoßdämpfers, so platziert ist, dass dieses infolge einer durch eine Frontalkollision bedingten Vorbauverformung mindestens das Bremsgerät so verlagert, dass das Bremspedal in Fahrtrichtung zur Stirnwand hin verschoben wird. Die Erfindung ist dadurch gekennzeichnet, dass das Vorbauteil vor einem Hauptbremszylindergehäuse des Bremsgeräts platziert ist und das fahrtrichtungsseitige Ende des Hauptbremszylindergehäuses so angeschrägt ist, dass sein Gehäusequerschnitt oben einen spitzen und unten einen stumpfen Winkel aufweist und das Bremsgerät, um dessen Durchlass durch die Stirnwand herum, an dieser über mindestens zwei Befestigungsstellen, eine erste im wesentlichen über dem oberen und eine zweite, im wesentlichen unter dem unteren Bereich des Durchlasses, befestigt ist.

Durch die Anordnung eines solchen Hauptbremszylinders mit Gehäuseabschrägung in Fahrzeuglängsrichtung hinter dem Federbeindom wird im Falle einer schweren Frontalkollision und Kontakt der beiden Bauteile vorteilhafterweise ein aufstellendes Moment auf die Bremsenbetätigungseinrichtung um eine Fahrzeugquerachse initiiert.

Insbesondere im Falle eines Unfalls kann eine erfindungsgemäße Bremsenbetätigungseinrichtung verhindern, dass als Folge einer daraus resultierenden Verformung des Fußraumbereichs die Füße bzw. Beine des Fahrers einem erhöhten Verletzungsrisiko ausgesetzt sind. So ist es praktisch ausgeschlossen, dass die Füße des Fahrers bei einem Crash durch das Bremspedal eingeklemmt werden. Bei geeigneter Gestaltung der Pedale wird auch die Verletzungsgefahr durch diese Pedale erheblich reduziert.

Bei einer vorteilhaften Ausführung der Erfindung ist der Lagerbock an mindestens zwei Befestigungsstellen karosseriefest angebracht, einer ersten im Bereich des Durchlasses und einer zweiten mit einem Befestigungskraftverlauf im wesentlichen in vertikaler Richtung.

Das hat den Vorteil, dass der Lagerbock an der zweiten Befestigungsstelle mit dem Befestigungskraftverlauf im wesentlichen in vertikaler Richtung durch ein gezieltes Versagen der Befestigung aufgrund des unfallbedingten aufstellenden Moments auf die Bremsenbetätigungseinrichtung freigegeben werden kann, damit die Verlagerung des Bremspedals in Fahrtrichtung zur Stirnwand hin mit dem Lagerbock möglich wird.

Eine weitere vorteilhafte Ausführung der Erfindung sieht vor, dass das Bremsgerät und der Lagerbock eine Einheit bilden, indem sie durch die Stirnwand hindurch miteinander verbunden sind. Dies ist einfach aufgebaut und preiswert herzustellen.

Eine bevorzugte Ausführung der Erfindung ist dadurch gekennzeichnet, dass das Bremsgerät und der Lagerbock über Befestigungsmittel des Bremsgeräts an der Stirnwand miteinander verbunden sind, was ebenfalls eine einfach herzustellende und preiswerte Ausführung der Erfindung ermöglicht.

Dabei ist es von Vorteil, wenn die zweite Befestigungsstelle des Lagerbocks als Sollbruchstelle ausgebildet ist.

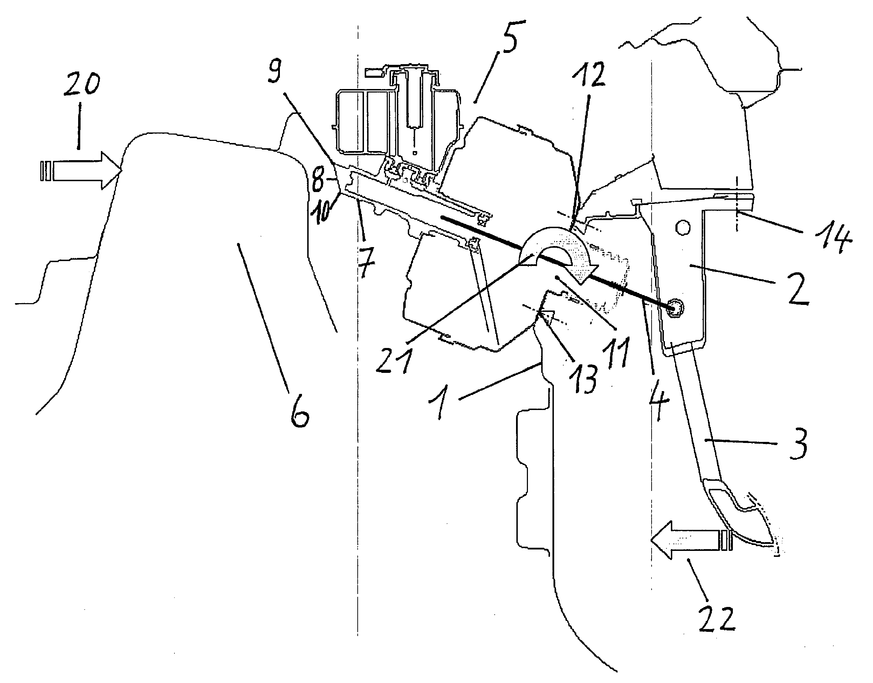

Ein bevorzugtes Ausführungsbeispiel der Erfindung beschreibt die nachfolgende Beschreibung mit der zugehörigen Zeichnung. Die einzige Figur zeigt eine erfindungsgemäße Bremsenbetätigungseinrichtung in einem Längsschnitt durch den entsprechenden nur teilweise angedeutet gezeichneten Fahrerfußraum- und Motorraumbereich eines Kraftfahrzeugs.

Eine Bremsenbetätigungseinrichtung für ein Kraftfahrzeug besteht im wesentlichen aus einem an einem Lagerbock 2 verschwenkbar befestigten, hängend angeordneten Bremspedal 3 im Fahrgastraum und einem über eine Druckstange 4 durch das Bremspedal 3 betätigbaren Bremsgerät 5 im Motorraum. Der Motorraum ist durch eine Stirnwand 1 vom Fahrgastraum abgetrennt. In Fahrtrichtung vor dem Bremsgerät 5 ist ein Dom 6 zur karosserieseitigen Lagerung eines nicht gezeichneten Stoßdämpfers oder Federbeins so platziert, dass infolge einer durch eine Frontalkollision bedingten Vorbauverformung das Bremsgerät 5 so verlagert wird, dass das Bremspedal 3 in Fahrtrichtung zur Stirnwand 1 hin verschoben wird. Dazu befindet sich der Federbeindom 6 vor einem Hauptbremszylindergehäuse 7 des Bremsgeräts 5 und zusätzlich ist das fahrtrichtungsseitige Ende 8 des Hauptbremszylindergehäuses 7 so angeschrägt, dass sein Gehäusequerschnitt oben einen spitzen 9 und unten einen stumpfen Winkel 10 aufweist. Außerdem ist das Bremsgerät 5, um dessen Durchlass 11 durch die Stirnwand 1 herum, an dieser über mindestens zwei Befestigungsstellen 12, 13, eine erste 12 im wesentlichen über dem oberen und eine zweite 13 im wesentlichen unter dem unteren Bereich des Durchlasses 11, befestigt.

Bei einer infolge einer Frontalkollision bedingten Vorbauverformung entgegen der Fahrtrichtung, angedeutet gezeichnet durch einen Pfeil 20, wird der Federbeindom 6 auf das angeschrägte fahrtrichtungsseitige Ende 8 des Hauptbremszylindergehäuses 7 geschoben. Durch das Auftreffen der gekrümmtem Fläche des Federbeindoms 6 auf die Abschrägung des Hauptbremszylindergehäuses 7 wird ein aufstellendes Moment um eine Fahrzeugquerachse, angedeutet gezeichnet durch einen Kreispfeil 21, in das Bremsgerät 5 eingeleitet. Die Fahrzeugquerachse, um die das Bremsgerät 5 verdreht wird, wird durch die Befestigungsstellen 12, 13 bestimmt. Ist das Bremsgerät 5 um dessen Durchlass 11 durch die Stirnwand 1 herum, an dieser, wie gezeichnet symmetrisch zum Durchlass 11, über die erste Befestigungsstelle 12 über dem oberen und über die zweite Befestigungsstelle 13 unter dem unteren Bereich des Durchlasses 11 befestigt, verdreht sich das Bremsgerät 5 um einen Drehpunkt, der im wesentlichen dem Drehmittelpunkt des Kreispfeiles 21 entspricht.

Der Lagerbock 2 ist an drei Befestigungsstellen 12, 13, 14 karosseriefest angebracht, einer ersten und dritten 12, 13 im Bereich des Durchlasses 11 und einer zweiten 14, mit einem Befestigungskraftverlauf im wesentlichen in vertikaler Richtung. Dabei bilden das Bremsgerät 5 und der Lagerbock 2 eine Einheit, indem sie durch die Stirnwand 1 hindurch über die erste und dritte Befestigungsstelle 12, 13 über nur strichpunktiert angedeutet gezeichnete Befestigungsmittel des Bremsgeräts 5 miteinander verbunden sind.

An der zweiten Befestigungsstelle 14 des Lagerbocks 2 kann dessen Befestigung als Sollbruchstelle ausgebildet sein, damit im Falle einer Frontalkollision durch ein gezieltes Versagen, zum Beispiel einer Verschraubung, der dann nur noch an der Stirnwand 1 befestigte Lagerbock 2 auch für die Drehbewegung freigegeben wird.

Unabhängig davon wird aber immer im Falle einer Frontalkollision mit der Verdrehung des Bremsgeräts 5, das über die Druckstange 4 mit diesem verbundene Bremspedal 3, aufgrund dieser Verbindung von der Druckstange 4 aus dem Fahrerfußraum heraus zur Stirnwand 1 hin gezogen, angedeutet gezeichnet durch einen Pfeil 22.

## Patentansprüche

1. Bremsenbetätigungseinrichtung für ein Kraftfahrzeug, mit einer einen Motorraum von einem Fahrgastraum trennenden Stirnwand (1), der mindestens ein hängend angeordnetes, an einem Lagerbock (2) verschwenkbar befestigtes Bremspedal (3) im Fahrgastraum und ein über eine Druckstange (4) vom Bremspedal (3) betätigbares Bremsgerät (5) im Motorraum zugeordnet ist, wobei in Fahrtrichtung vor dem Bremsgerät (5) ein Vorbauteil, insbesondere ein Dom (6) zur karosserieseitigen Lagerung eines Stoßdämpfers, so platziert ist, dass dieses infolge einer durch eine Frontalkollision bedingten Vorbauverformung mindestens das Bremsgerät (5) so verlagert, dass das Bremspedal (3) in Fahrtrichtung zur Stirnwand (1) hin verschoben wird **dadurch gekennzeichnet, dass** das Vorbauteil vor einem Hauptbremszylindergehäuse (7) des Bremsgeräts (5) platziert ist und das fahrtrichtungsseitige Ende (8) des Hauptbremszylindergehäuses (7) so angeschrägt ist, dass sein Gehäusequerschnitt oben einen spitzen (9) und unten einen stumpfen Winkel (10) aufweist und das Bremsgerät (5), um dessen Durchlass (11) durch die Stirnwand (1) herum, an dieser über mindestens zwei Befestigungsstellen (12, 13), eine erste (12) im wesentlichen über dem oberen und eine zweite (13) im wesentlichen unter dem unteren Bereich des Durchlasses (11), befestigt ist.

2. Bremsenbetätigungseinrichtung nach Anspruch 1, **dadurch gekennzeichnet, dass** der Lagerbock (2) an mindestens zwei Befestigungsstellen (12, 13, 14) karosseriefest angebracht ist, einer ersten (12, 13) im Bereich des Durchlasses (11) und einer zweiten (14) mit einem Befestigungskraftverlauf im wesentlichen in vertikaler Richtung.

3. Bremsenbetätigungseinrichtung nach Anspruch 1 oder 2, **dadurch gekennzeichnet, dass** das Bremsgerät (5) und der Lagerbock (2) eine Einheit bilden, indem sie durch die Stirnwand (1) hindurch miteinander verbunden sind.

4. Bremsenbetätigungseinrichtung nach Anspruch 3, **dadurch gekennzeichnet, dass** das Bremsgerät (5) und der Lagerbock (2) über Befestigungsmittel des Bremsgeräts (5) an der Stirnwand (1) miteinander verbunden sind.

5. Bremsenbetätigungseinrichtung nach einem der Ansprüche 1 bis 4, **dadurch gekennzeichnet, dass** an der zweiten Befestigungsstelle (14) des Lagerbocks (2) dessen Befestigung mit einer Sollbruchstelle versehen ist.

## Claims

1. A brake actuating device for a motor vehicle, with an end wall (1), which separates an engine compartment from a passenger compartment and with which at least one brake pedal (3) that is arranged suspended and pivotably fastened to a bearing block (2) in the passenger compartment and a brake unit (5) that can be actuated by the brake pedal (3) by means of a pressure rod (4) in the engine compartment are associated, wherein a front end, more especially a dome (6), for the mounting of a shock absorber on the body side is placed in front of the brake unit (5) in the direction of travel in such a way that said front end displaces at least the brake unit (5) as a result of a front end deformation caused by a head-on collision in such a way that the brake pedal (3) is displaced in the direction of travel toward the end wall (1), **characterised in that** the front end is placed in front of a main brake cylinder housing (7) of the brake unit (5) and the end (8), which is on the side of the direction of travel, of the main brake cylinder housing (7) is inclined in such a way that its housing cross-section has an acute angle (9) at the top and an obtuse angle (10) at the bottom and the brake unit (5), around its passage (11) through the end wall (1), is fastened thereto by means of at least two fastening points (12, 13), a first fastening point (12) substantially above the upper region of the passage (11) and a second one (13) substantially below the lower region of said passage (11).

2. A brake actuating device according to claim 1, **characterised in that** the bearing block (2) is secured to the body at at least two fastening points (12, 13, 14), a first fastening point (12, 13) in the region of the passage (11) and a second fastening point (14) with a fastening force path substantially in the vertical direction.

3. A brake actuating device according to claim 1 or 2, **characterised in that** the brake unit (5) and the bearing block (2) form a unit, **in that** they are connected to one another through the end wall (1).

4. A brake actuating device according to claim 3, **characterised in that** the brake unit (5) and the bearing block (2) are connected to one another by fastening means of the brake unit (5) on the end wall (1).

5. A brake actuating device according to any one of claims 1 to 4, **characterised in that** at the second fastening point (14) of the bearing block (2), the fastening thereof is provided with a desired breaking point.

## Revendications

1. Installation d'actionnement de freins de véhicule automobile comportant une cloison (1) séparant l'enceinte du moteur et l'habitacle des passagers, cette cloison étant associée à au moins une pédale de frein (3) fixée de manière pivotante, suspendue à un bloc de palier (2) dans l'habitacle et une tige de poussée (4) d'un dispositif de freins (5) actionnée par la pédale de frein (3) dans l'enceinte du moteur,
* dans le sens de circulation en amont du dispositif de freins (5) il est prévu un composant amont notamment un dôme (6) recevant un amortisseur du côté de la carrosserie, ce dôme étant placé pour que sous l'effet d'une déformation de l'avant, occasionnée par une collision frontale, au moins le dispositif de frein (5) est déplacé pour que la pédale de frein (3) soit décalée dans la direction de circulation vers la paroi frontale (1),
installation **caractérisée en ce que**
le composant amont est situé devant le boîtier du maître-cylindre de frein (7) du dispositif de frein (5), et
l'extrémité (8) côté direction de déplacement du boîtier (7) du maître-cylindre est incliné pour que son segment de boîtier présente en partie supérieure un angle aigu (9) et en partie inférieure un angle obtus (10) et l'appareil de frein (5) est fixé autour du passage (11) à travers la cloison frontale (1), à celle-ci, par l'intermédiaire d'au moins deux points de fixation (12, 13), un premier point de fixation essentiellement fixé au-dessus du passage (12) et un second point de fixation (13) essentiellement situé sous la zone inférieure du passage (11).

2. Installation d'actionnement de freins selon la revendication 1,
**caractérisée en ce que**
le bloc de palier (2) est relié solidairement à la carrosserie par au moins deux points de fixation (12, 13, 14), un premier point de fixation (12, 13) au niveau du passage (11) et un second point de fixation (14) avec un tracé de fixation essentiellement vertical.

3. Installation d'actionnement de freins selon la revendication 1 ou 2,
**caractérisée en ce que**
le dispositif de freins (5) et le bloc de palier (2) reliés à travers la paroi frontale (1) constituent un ensemble.

4. Installation d'actionnement de freins selon la revendication 3,
**caractérisé en ce que**
le dispositif de freins (5) et le bloc de palier (2) sont reliés l'un à l'autre et à la cloison (1) par les moyens de fixation du dispositif de freins (5).

5. Installation d'actionnement de freins selon l'une des revendications 1 à 4,
**caractérisée par**
un point de rupture de consigne de la fixation au niveau du second point de fixation (14) du bloc de palier (2).
